# EUROPEAN PATENT APPLICATION

(11) **EP 4 510 512 A1**
(43) Date of publication of application: **19.02.2025**
(21) Application number: 23212365.3
(22) Date of filing: 27.11.2023
(51) Int. Cl.: H04L 12/40, H04L 61/5038

(54) **ADDRESS ASSIGNMENT APPARATUS, POWER DISTRIBUTION CABINET, ADDRESS ASSIGNMENT METHOD, AND STORAGE MEDIUM**

(30) Priority: 15.08.2023 CN 202311030514
(71) Applicant: Schneider Electric (China) Co., Ltd., Beijing 100102 (CN)
(72) Inventor: SHUANG, Bing, Beijing, 100102 (CN); BAI, Wanlong, Beijing, 100102 (CN); SONG, Yangfeng, Beijing, 100102 (CN); ZHAO, Zhenshan, Beijing, 100102 (CN); SHI, Ying, Beijing, 100102 (CN)
(74) Representative: Manitz Finsterwald Patent- und Rechtsanwaltspartnerschaft mbB

(57) **Abstract**

According to embodiments of the present disclosure, an address assignment apparatus, a power distribution cabinet, an address assignment method, and a storage medium are provided. The address assignment apparatus comprises: a gateway configured to generate an address signal that enables address assignment; an address assignment line coupled to the gateway to receive the address signal, the address assignment line is provided with a plurality of switches; a plurality of connection units disposed in series along the address assignment line and each adapted to be connected to a bus device, each of the plurality of switches is located within one of the plurality of connection units, each of the plurality of connection units is further adapted to: couple the address assignment line to the bus device, control an on-off state of a switch located within the connection unit according to a switch control signal from the connected bus device to control a delivery of the address signal to a downstream connection unit. According to the embodiments of the present disclosure, a rapid assignment of addresses of bus devices can be realized, thereby shortening the debugging and maintenance time of a system.

## Description

### FIELD

The exemplary embodiments of the present disclosure generally relate to the field of electrical equipment, and in particular, to address assignment apparatuses, power distribution cabinet, address assignment methods, and storage medium.

### BACKGROUND

In a fieldbus-based device communication system, each device needs to have a unique identification number, which is a communication address. The purpose of such a design is to ensure that devices can accurately communication and interact with each other. By assigning a unique communication address to each device, the system can easily identify and locate a bus device, and transmit instructions to or acquire data from it. The existence of this independent identification enables the system to achieve precise and reliable point-to-point or multi-to- multi communications.

### SUMMARY

The embodiments of the present disclosure provide an address assignment apparatus, a power distribution cabinet, an address assignment method, and a storage medium.

In a first aspect of the present disclosure, there is provided an address assignment apparatus. The apparatus comprises: a gateway configured to generate an address signal that enables address assignment; an address assignment line coupled to the gateway to receive the address signal, wherein the address assignment line is provided with a plurality of switches; a plurality of connection units disposed in series along the address assignment line and each adapted to be connected to a bus device, wherein each of the plurality of switches is located within one of the plurality of connection units, and each of the plurality of connection units is further adapted to couple the address assignment line to a bus device to which the connection unit is connected, and control, according to a switch control signal from the connected bus device, an on-off state of a switch of the plurality of switches that is located within the connection unit to control a delivery of the address signal to a downstream connection unit of the plurality of connection units, the downstream connection units being located downstream of the connection unit relative to the gateway.

In some embodiments of the first aspect, each of the plurality of connection units is further adapted to: in response to the switch control signal being a first control signal, cause a switch within the connection unit to be in an open state to prevent the address signal from being delivered to the downstream connection unit; and in response to the switch control signal being a second control signal different from the first control signal, cause the switch within the connection unit to be in a closed state, so that the address signal is delivered to the downstream connection unit.

In some embodiments of the first aspect, each of the plurality of switches is a normally closed switch, the second control signal maintains the closed state of the normally closed switch, and the first control signal causes the normally closed switch to open.

In some embodiments of the first aspect, the apparatus further comprises: a communication data line connected to the gateway and in parallel with the address assignment line, and wherein each of the plurality of connection units is further adapted to couple the communication data line to a bus device to which the connection unit is connected.

In some embodiments of the first aspect, the gateway is further configured to: in a case that the address signal is valid, transmit a first address to be assigned through the communication data line; and in response to determining that the first address has been assigned, transmit a second address to be assigned through the communication data line.

In some embodiments of the first aspect, the communication data line comprises: a transmission data line adapted to transmit data from the gateway; and a reception data line adapted to transmit data to the gateway.

In a second aspect of the present disclosure, there is provided a power distribution cabinet. The power distribution cabinet comprises: the address assignment apparatus according to the first aspect; and at least one bus device, each of the at least one bus device is connected to one of the plurality of connection units and configured to set the switch control signal provided to a connection unit to which the bus device is connected based on an address assignment state of the bus device.

In some embodiments of the second aspect, each of the at least one bus device is further configured to: in response to the bus device not being assigned an address by the gateway, set the switch control signal to be a first control signal, so that a switch within the connected connection unit is in an open state; and in response to the bus device being assigned an address by the gateway, set the switch control signal to be a second control signal different from the first control signal, so that the switch within the connected connection unit is in a closed state.

In some embodiments of the second aspect, each of the at least one bus device is further configured to: in response to the bus device having a preset address, set the switch control signal to be the first control signal.

In some embodiments of the second aspect, each of the at least one bus device is further configured to: in response to receiving the address signal via a connection unit to which the bus device is connected, perform address assignment for the bus device according to a communication with the gateway.

In some embodiments of the second aspect, each of the at least one bus device is further configured to: receive an address to be assigned from the gateway via the connected connection unit; in response to receiving the address signal, set the bus device to have the address; and transmit a positive response that the address has been assigned to the gateway via the connected connection unit.

In a third aspect of the present disclosure, there is provided an address assignment method. The address assignment method comprises: acquiring an address assignment state indicating whether a bus device has been assigned an address by a gateway; and setting a switch control signal provided to a connection unit to which the bus device is connected based on the address assignment state, the switch control signal is used for controlling an on-off state of a switch within the connected connection unit to control a delivery of an address signal generated by the gateway to a downstream connection unit along an address assignment line, wherein the downstream connection unit is disposed in series with the connected connection unit along the address assignment line, and is located downstream of the connected connection unit relative to the gateway.

In some embodiments of the third aspect, setting the switch control signal provided to a connection unit to which the bus device is connected comprises: in response to the bus device not being assigned an address by the gateway, setting the switch control signal to be a first control signal, so that a switch within the connected connection unit is in an open state; and in response to the bus device being assigned an address by the gateway, setting the switch control signal to be a second control signal different from the first control signal, so that the switch within the connected connection unit is in a closed state.

In some embodiments of the third aspect, setting the switch control signal provided to a connection unit to which the bus device is connected comprises: in response to the bus device having a preset address, setting the switch control signal to be the first control signal.

In some embodiments of the third aspect, the address assignment method further comprises: in response to receiving the address signal via a connection unit to which the bus device is connected, performing address assignment for the bus device according to a communication with the gateway.

In some embodiments of the third aspect, performing address assignment for the bus device according to a communication with the gateway comprises: receiving an address to be assigned from the gateway via the connected connection unit; in response to receiving the address signal, setting the bus device to have the address; and transmitting a positive response that the address has been assigned to the gateway via the connected connection unit.

In a fourth aspect of the present disclosure, there is provided a machine-readable storage medium. The machine-readable storage medium comprises a program stored thereon, which is executable by a processor to perform the method according to the third aspect.

Through the following description, it should be understood that according to the embodiments of the present disclosure, a location-related bus address automatic assignment method is provided for bus devices. The on-off state of a switch within a connection unit is controlled according to a switch control signal from the bus device, thereby achieving automatic address assignment for the bus device. In this way, the address assignment and topology structure of bus devices can be rapidly and efficiently constructed. As a result, the debugging and maintenance time of a system is significantly shortened. Other benefits will be described below in conjunction with corresponding embodiments.

It should be understood that the contents described in the Summary section is not intended to identify key or essential features of the embodiments of the present disclosure, nor is it intended to be used to limit the scope of the present disclosure. Other features of the present disclosure will become easily comprehensible through the following description.

### BRIEF DESCRIPTION OF THE DRAWINGS

The above and other features, advantages, and aspects of various embodiments of the present disclosure will become more apparent with reference to the following detailed description in conjunction with the accompanying drawings. In the accompanying drawings, the same or similar reference numerals represent the same or similar elements, where:
Figure 1 illustrates a structural schematic diagram of a portion of a power distribution cabinet that includes an address assignment apparatus and bus devices according to some embodiments of the present disclosure;
Figure 2A illustrates a schematic diagram of a topology structure of a power distribution cabinet according to some embodiments of the present disclosure;
Figure 2B illustrates a schematic diagram of a bus constitution in an address assignment apparatus according to some embodiments of the present disclosure;
Figure 2C illustrates a schematic diagram of a connection unit according to some embodiments of the present disclosure;
Figures 3A to 3D illustrate schematic diagrams of example processes of address assignment according to some embodiments of the present disclosure; and
Figure 4 illustrates a flowchart of an example method for address assignment according to some embodiments of the present disclosure.

### DETAILED DESCRIPTION

The embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to the embodiments set forth herein. Rather, these embodiments are provided for a more thorough and complete understanding of the present disclosure. It should be understood that the accompanying drawings and the embodiments of the present disclosure are only for illustrative purposes and are not intended to limit the scope of protection of the present disclosure.

In the description of the embodiments of the present disclosure, the term "comprise" and similar terms should be interpreted as open inclusion, that is, "including but not limited to". The term "based on" should be interpreted as "based at least in part on". The term "an embodiment" or "the embodiment" should be interpreted as "at least one embodiment". The term "some embodiments" should be interpreted as "at least some embodiments". Other explicit and implicit definitions may also be included below. The terms "first", "second", etc. may refer to different or identical objects. Other explicit and implicit definitions may also be included below.

As briefly mentioned earlier, bus devices need to have unique communication addresses to achieve reliable communications. In some address assignment schemes, the communication address of each bus device is specified through manual intervention or operation, such as through physical switches, dip switches, adjustment knobs, Human-Machine Interface (HMI, e.g., using a touch screen, input device, etc.) menu settings. However, when there is a large number of bus devices, a lot of human labor is required to set addresses.

In other address assignment schemes, an automated address assignment mechanism based on bus data interaction is defined through bus protocols, and addresses are assigned to bus devices based on this mechanism. However, such a mechanism relies on a specific protocol, and the assigned addresses have a certain degree of uncertainty. It is difficult to ensure that the address assigned to the same bus device is the same every time, which brings some trouble to the upper system in identifying the bus device.

In power distribution systems, especially low-voltage power distribution systems, bus devices are located in a dedicated power distribution cabinet within the low-voltage power distribution system. The locations of the bus devices within the power distribution cabinet are fixed. Such bus devices are connected by using a fieldbus, then a gateway performs protocol translation, and connected to an edge control system. The edge control system usually needs to establish a virtual model of the bus devices within the power distribution cabinet, so that users can correspond the virtual model to the actual bus devices. Therefore, it becomes valuable to assign communication addresses based on device locations and to automatically and quickly establish communication connections.

In order to solve, or at least partially solve the address assignment problem of bus devices, the embodiments of the present disclosure provide an address assignment apparatus and an assignment scheme thereof. In this address assignment apparatus, the on-off state of a switch within a connection unit is controlled according to a switch control signal from the bus device, thereby achieving automatic address assignment for the bus devices.

According to the embodiments of the present disclosure, the address assignment apparatus comprises a gateway configured to generate an address signal that enables address assignment. The address assignment apparatus also comprises an address assignment line coupled to the gateway to receive the address signal. The address assignment line is provided with a plurality of switches. The address assignment apparatus also comprises a plurality of connection units disposed in series along the address assignment line and each adapted to be connected to a bus device. Each of the plurality of switches is located within one of the plurality of connection units. Each connection unit couples the address assignment line to a bus device to which the connection unit is connected, and controls, according to a switch control signal from the connected bus device, an on-off state of a switch of the plurality of switches that is located within the connection unit to control a delivery of the address signal to a downstream connection unit of the plurality of connection units. The downstream connection unit is located downstream of the connection unit relative to the gateway. In this way, the address assignment and topology structure of bus devices can be rapidly and efficiently constructed. This significantly shortens the debugging and maintenance time of the system.

Some exemplary embodiments of the present disclosure will be described below with reference to the accompanying drawings. Note that in several descriptions of the embodiments, some specific numerical values may be involved in order to better assist readers in understanding. These numerical values are exemplary, which may vary according to specific application scenarios, without limiting the scope of the present disclosure in any way.

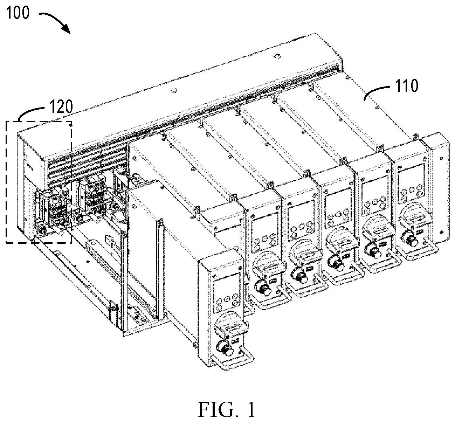

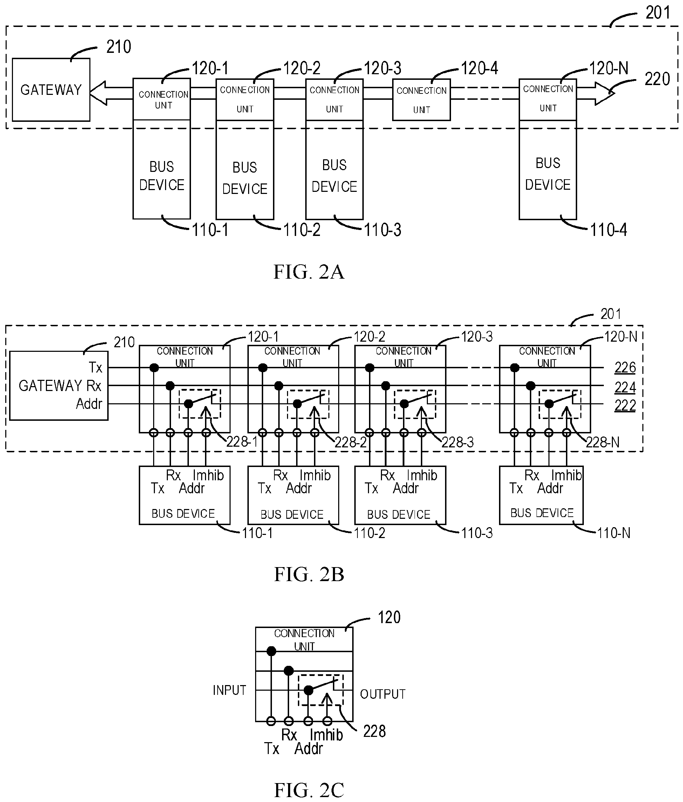

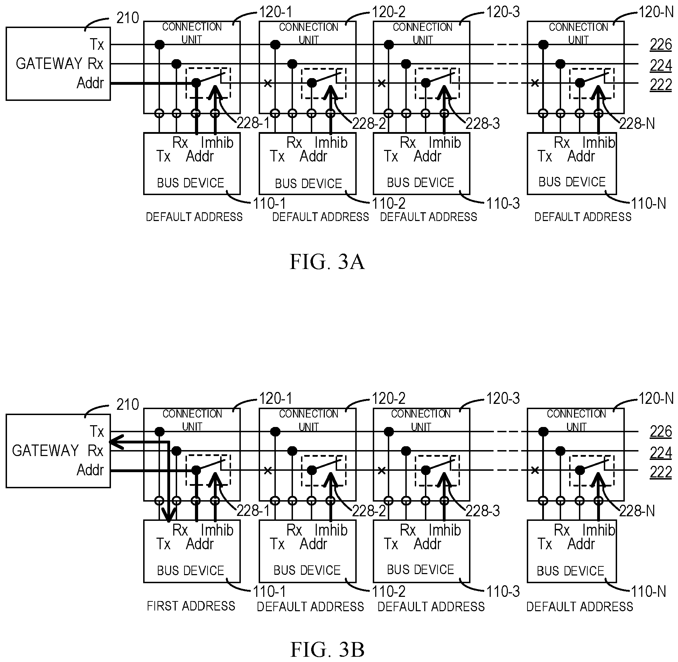

The structural schematic diagram of a power distribution cabinet comprising an address assignment apparatus according to some embodiments of the present disclosure will be described below in connection with Figure 1, an example topology structure of a power distribution cabinet comprising an address assignment apparatus will be described in connection with Figures 2A and 2B, and exemplary processes of address assignment will be described in connection with Figures 3A to 3D.

Referring first to Figure 1, the address assignment apparatus according to some embodiments of the present disclosure may be implemented in a power distribution cabinet 100. The address assignment apparatus may comprise a plurality of connection units 120. The connection unit 120 comprises, for example, a slot, an interface, or a port for connection to a bus device 110. The bus device 110 may comprise various suitable devices required in the power distribution cabinet. In some embodiments, the bus device 110 may be implemented in the form of a drawer, such as shown in Figure 1, and therefore may also be referred to as a drawer. Accordingly, the power distribution cabinet 100 may also be referred to as a drawer cabinet. For example, in a low-voltage power distribution system, the address assignment apparatus may be provided within a low-voltage power distribution cabinet.

The plurality of connection units 120 constitute, for example, a part of a backplane connector. A plurality of bus devices 110 are physically connected together through the backplane connector, so that these bus devices 110 can share power and data signals. In addition, the backplane connector also provides mechanical stability and reliability, which ensure that each bus device is properly inserted and well contacted.

The address assignment apparatus may also comprise a gateway (not shown in Figure 1). The gateway may be implemented in a hardware device or software for functions, such as, address assignment and translation, data processing and analysis, protocol translation, routing selection and so on.

In some embodiments, the power distribution cabinet 100 may also comprise a housing, guide rails, or partitions, etc. The housing is made of metal or synthetic materials, for example, to protect the bus devices 110 and the connection units 120 from environmental factors, such as, physical damage, dust or moisture. The guide rails, for example, are made of steel, so that the bus devices 110 can be smoothly pushed in and pulled out. The partitions (not shown in Figure 1) for example are made of metal or synthetic materials, which are used to separate and organize the internal space to better accommodate bus devices 110.

It should be understood that the structure of the power distribution cabinet in which the address assignment apparatus shown in Figure 1 can be disposed is only exemplary and is not intended to limit the scope of the present disclosure. In the embodiments of the present disclosure, the power distribution cabinet may have any suitable structure.

Figures 2A and 2B illustrate schematic diagrams of the topology structure of the address assignment apparatus 201 according to some embodiments of the present disclosure. The address assignment apparatus 201 comprises a gateway 210, the plurality of bus devices 110 (such as, bus devices 110-1, 110-2, ..., 110-4, which may be collectively or individually referred to as bus device 110), the plurality of connection units 120 (such as, connection units 120-1, 120-2, ..., 120-N, which may be collectively or individually referred to as connection unit 120), and a bus 220 coupled to the gateway 210.

The plurality of connection units 120 are disposed in series along the bus 220 and each adapted to be connected to one bus device 110. For example, the connection unit 120-1 is connected to the bus device 110-1, the connection device 120-2 is connected to the bus device 110-2, the connection unit 120-3 is connected to the bus device 110-3, and so on. These connection units 120 are connected in series through the bus 220, thereby forming a T-shaped topology with the bus device 110. In the embodiments of the present disclosure, the connection unit 120 is adapted to be connected to the bus device 110, but in some cases, it is not required that each connection unit 120 be connected to the bus device 110. It will be understood from the following description that in some embodiments, in the case where one or more connection units 120 are not connected to any bus device 110 (for example, the connection unit 120-4 is not connected to the bus device 110 in Figure 2A) or the bus device 110 to which they are connected fails, the address assignment apparatus or power distribution cabinet according to the embodiments of the present disclosure can function normally.

Referring to Figure 2A, the gateway 210 is configured to generate an address signal. The address signal is used to enable address assignment. The address signal may be any suitable type of signal, and the embodiments of the present disclosure are not limited in this regard. For example, in a case where the address signal is at a high level, the gateway 210 enters an address assignment state, so that a communication address (hereinafter referred to as address) may be assigned to the bus device 110. Upon receiving the address signal, the bus device 120 sets the address according to a communication with the gateway 210. By way of example, the gateway 210 may be a motor control center (MCC) head device.

Referring to Figure 2B, the bus 220 comprises an address assignment line 222. The address assignment line 222 is coupled to the gateway 210, so that the address signal may be received. In this case, these connection units 120 are disposed in series along the address assignment line 222.

The address assignment line 222 is provided with a plurality of switches 228 (such as, the switches 228-1, 228-2,..., 228-N, which may be collectively or individually referred to as switch 228). The plurality of switches 228 are respectively arranged in the plurality of connection units 120, that is, one switch 228 is located within one connection unit 120.

The connection unit 120 is configured to couple the address assignment line 222 to the bus device 110 and control an on-off state of the switch 228 according to a switch control signal from the bus device 110.

In the example of Figure 2B, the gateway 210 comprises an address port Addr. The bus device 110 comprises an address port Addr and a control port Imhib. The address port Addr of each bus device 110 and the address port Addr of the gateway 210 are connected to the address assignment line 222. Accordingly, as shown in Figure 2C, the connection unit 120 comprises an address port Addr to couple the address port Addr of the bus device 110 to the address assignment line 222. The control port "Imhib" of each bus device 110 is respectively coupled to the switch 228 in the connected connection unit 120 via the control port Imhib of the connection unit 120 (such as shown in Figure 2C) to control the on-off state of the switch 228 through the switch control signal.

As an example, the bus device 110-1 is always connected to the gateway 210 through the address assignment line 222, so that it may receive the address signal from the gateway 210. If the bus device 110-1 controls the switch 228-1 to close through the switch control signal, the bus device 110-2 may be connected to the gateway 210 through the address assignment line 222 via the switch 228-1, so that it may receive the address signal from the gateway 210. If the bus device 110-2 controls the switch 228-2 to close through the switch control signal, the bus device 110-3 may be connected to the gateway 210 through the address assignment line 222 via switches 228-2 and 228-1, so that it may receive the address signal from the gateway 210. In this way, the address signal transmitted by the gateway 210 may be controlled to be delivered along the address assignment line 222 to the downstream connection unit 120.

In the embodiments of the present disclosure, a downstream connection unit 120 of a connection unit 120 is located downstream of the connection unit 120 relative to the gateway 210 (i.e., the signal source) on the transmission path of the address signal. For example, the connection units 120-2 to 120-N are downstream connection units of the connection unit 120-1. In a case where the switch 228-1 is closed, the address signal may be delivered to the connection unit 120-2 via the connection unit 120-1. The connection units 120-3 to 120-N are downstream connection units of the connection unit 120-2. In a case where the switches 228-1 and 228-2 are both closed, the address signal continues to be delivered to the connection unit 120-3 via the connection units 120-1 and 120-2, and so on.

In some embodiments, if the switch control signal is a certain control signal (also referred to as a first control signal), the switch 228 is controlled to be in an open state to prevent the address signal from being delivered to a downstream connection unit. If the switch control signal is another control signal (also referred to as a second control signal), the switch 228 is controlled to be in a closed state to cause the address signal to be delivered to the downstream connection unit. That is, the first control signal may control the switch 228 to open, and the second control signal different from the first control signal may control the switch 228 to close.

The switch control signal may be any suitable type of signal. For example, the switch control signal may be a pulse signal, and accordingly, the first control signal and the second control signal may have different pulse waveforms. For another example, the first control signal and the second control signal may have different levels.

As an example, levels of a switch control signal used to control a certain type of switch 228 comprise high and low levels. If the switch control signal is at a high level, the switch is open, and the address signal can only be transmitted to the connection unit 120 where the switch 228 is located. If the switch control signal is at a low level, the switch is closed, and the address signal can continue to be delivered to another connection unit 120 in the downstream direction via the connection unit 120 where the switch 228 is located.

In some embodiments, the switch 228 may be a normally closed switch. For example, in the example of Figure 2A, the address assignment apparatus 201 comprises the plurality of connection units 120. In some cases, these connection units 120 are not all connected to the bus device 110, for example, the connection unit 120-4. In a case of not connected to the bus device 110, the switch 228 in the connection unit 120-4 remains in a closed state, and the address signal may continue to be delivered to the connection unit 120 in the downstream direction via the connection units 120-4. That is to say, in a case where the connection unit 120 is connected to the bus device 110, the address signal may be controlled to be delivered to each connection unit 120 in sequence, so that the gateway 210 may assign the address to the bus device 110 coupled to the connection unit 120. In a case where the connection unit 120 is not connected to the bus device 110, as there is no need for address assignment, it is sufficient to ensure that the address signal passes through directly.

In this embodiment, by using the normally closed switch, it is possible to ensure the proper address assignment without requiring each of the connection units 120 to be connected to the bus device 110. This improves the flexibility of the arrangement of individual bus devices 110 in the power distribution cabinet. In addition, in the event of a failure of the connected bus device 110, the address assignment and subsequent communication can also proceed properly. In this way, the reliability of the address assignment apparatus and power distribution cabinet can be improved.

In some embodiments, in order to transmit address data to the bus device 110, the bus 220 in the address assignment apparatus 110 also comprises a communication data line. One end of the communication data line is connected to the gateway 210 and in parallel with the address assignment line 222. The connection unit 120 couples such a communication data line to the bus device 110 to which it is connected. Thus, the gateway 210 may establish communication links with the respective bus devices 110 through the communication data line. In a case where the on-off state of the switch 228 in each connection unit 120 is controlled so that when the bus devices 110 are sequentially connected to the address assignment line 222, the gateway 210 can assign addresses to these bus devices 110 in sequence.

In some embodiments, referring to Figure 2B, the communication data line may comprise a transmission data line 226 and a reception data line 224. One end of the transmission data line 226 is connected to a transmission port Tx of the gateway 210, and is coupled to a transmission port Tx of each bus device 110 via a transmission port Tx of each connection unit 120. As a result, the gateway 210 may transmit data, for example, addresses to be assigned, to respective bus devices 110 through the transmission data line 226. One end of the reception data line 224 is connected to a reception port Rx of the gateway 210, and is coupled to a reception port Rx of each bus device 110 via a reception ports Rx of each connection unit 120. As a result, the gateway 210 may receive data, such as, responses to the address assignment, from respective bus devices 110 through the reception data line 224.

In some embodiments, in a case where the address signal is valid (for example, in a case where the address signal is at a preset level, the address signal has a predetermined waveform, or the gateway 210 transmits the address signal), the gateway 210 may transmit the address to be assigned (also referred to as a first address) through the transmission data line 226 in the communication data line. When it is determined that the address has been assigned, the next address to be assigned (also referred to as a second address) is transmitted through the transmission data line 226 in the communication data line, and so on, until all the bus devices 110 that access the address assignment line 222 are assigned addresses. For example, the gateway 210 broadcasts address data (for example, including the first address to be assigned) to respective bus devices 110 through the transmission data line 226. In this case, all bus devices 110 can receive the address data, but only the bus devices 110 that access the address assignment line 222 and receive the address signal can respond, for example, setting their own addresses, transmitting a positive response, and so on. The process of address assignment will be described below with reference to Figures 3A to 3D.

Figures 3A to 3D illustrate schematic diagrams of an example process of address assignment according to some embodiments of the present disclosure. In this example, all bus devices 110 are set with a default address. When the address assignment apparatus 201 is initially powered on, in response to having a default address, that is, in response to not being assigned an address by the gateway 210, each bus device 110 controls the switch 228 to open through the switch control signal. For example, all bus devices 110 may assert switch control signals to prohibit the delivery of address signals.

In the example of Figure 3A, the address signal is valid (for example, the gateway 210 sets the address signal to be at a high level or the address signal has a predetermined waveform), and the gateway 210 is in an address assignment state. At this point, only the bus device 110-1 may receive the address signal from the gateway 210, and the bus devices 110-2 to 110-N are disconnected from the gateway 210 and thus cannot receive the address signal.

In the example of Figure 3B, the gateway 210 broadcasts the first address to be assigned to the respective bus devices 110 through the transmission data line 226. Since the bus device 110-1 can receive the address signal from the gateway 210, it is aware that the gateway 210 is in the address assignment state. The bus device 110-1 may set the first address received from the transmission data line 226 as its own address and transmit a positive response that the first address has been assigned to the gateway 210 through the reception data line 224.

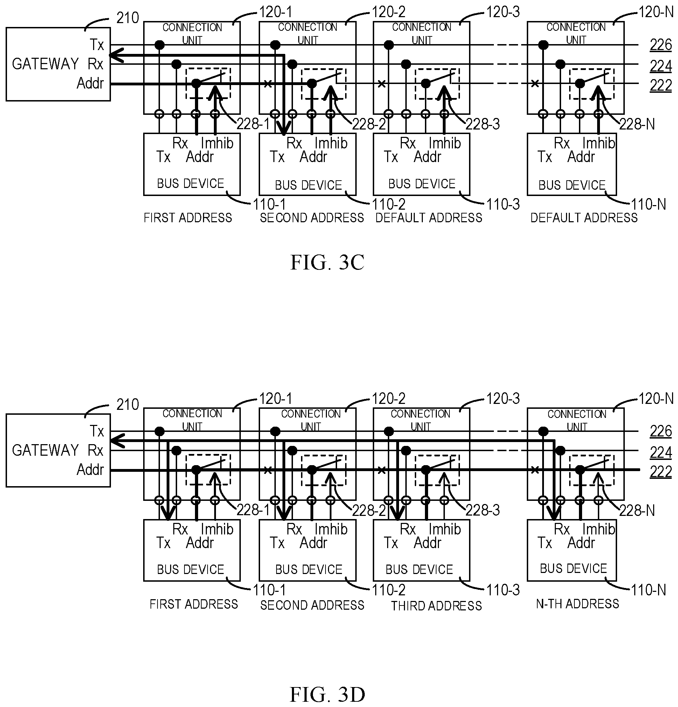

In the example of Figure 3C, since the address has already been assigned, the bus device 110 controls the switch 228-1 to close through the switch control signal to facilitate the delivery of the address signal in the downstream direction. For example, the bus device 110-1 may release the switch control signal.

Accordingly, after receiving the positive response that the first address has been assigned, the gateway 210 broadcasts the second address to be assigned through the transmission data line 226. At this point, both bus devices 110-1 and 110-2 can receive the address signal from the gateway 210. Since the bus device 110-1 has already set the first address, it will no longer compete for the second address. For example, the bus device 110-1 compares the current address with the default address, and if it is not the default address, the bus device 110-1 determines that it has set a valid address. The bus device 110-2 may set the second address received from the transmission data line 226 as its own address and transmit the positive response that the second address has been assigned to the gateway 210 through the reception data line 224. Since the bus device 110-2 has been assigned the address, it controls the switch 228-2 to close through the switch control signal to facilitate the delivery of address signal in the downstream direction. For example, the bus device 110-2 may release the switch control signal.

The above example process is repeated, the gateway 210 assigns addresses to respective bus devices 110 in sequence. The bus device 110 whose address has been set controls the switch 228 to close through the switch control signal. In the example shown in Figure 3D, after receiving a positive response that the N-th address has been assigned, the gateway 210 broadcasts the N-th address to be assigned through the transmission data line 226. At this point, the first N-1 bus devices 110 have been assigned addresses. The bus device 110-N may set the N-th address received from the transmission data line 226 as its own address and transmit the positive response to the gateway 210 that the N-th address has been assigned through the reception data line 224. At this point, all bus devices 110 have changed from having the same default address to having unique addresses. The gateway 210 may establish communication connections with respective bus devices 110 based on the addresses.

The present disclosure also provides a power distribution cabinet. The power distribution cabinet may comprise the address assignment apparatus 201 and at least one bus device 110. The bus device 110 is connected to the connection unit 120 in the address assignment apparatus 201. The bus device 110 is configured to set the switch control signal provided to the connection unit 120 based on its own address assignment state.

In some embodiments, if the bus device 110 is not assigned an address by the gateway 210, the bus device 110 sets the switch control signal as the first control signal, so that the switch 228 within the connected connection unit 120 is in an open state. In such a case, if the bus device 110 receives the address signal and address data, it may set its own address. If the bus device 110 has been assigned an address by the gateway 210, the bus device 110 sets the switch control signal as the second control signal, so that the switch 228 within the connected connection unit 120 is in a closed state. In such a case, it will not affect the gateway 210 to continue to assign addresses to the bus device 110 connected to the downstream connection unit 120.

In some embodiments, if the bus device 110 has a preset address, for example, a default address, the bus device 110 sets the switch control signal as the first control signal, so that the switch 228 within the connected connection unit 120 is in the open state. In such a case, it will not compete with other bus devices 110 for addresses when the gateway 210 assigns the addresses. That is, it is ensured that only one bus device 110 that is not assigned an address can receive the address signal and address data, and set its own address.

In some embodiments, in response to the received address signal, the bus device 110 may perform address assignment for itself according to a communication with the gateway 210. For example, in a case where the address signal is valid, the bus device 110 receives the address signal from the address assignment line 222, and determines that the gateway 210 is in the address assignment state. The bus device 110 receives address data to be assigned from the communication data line and sets its own address.

In some embodiments, the bus device 110 receives addresses to be assigned from the gateway 210. In a case where the address signal is valid, the bus device 110 sets the received address to be assigned as its own address. Moreover, the bus device 110 transmits a positive response that the address to be assigned has been assigned to the gateway 210 through the connected connection unit 120.

In summary, the present disclosure provides an address assignment apparatus and a power distribution cabinet that can automatically assign addresses to the bus devices. The on-off state of switches within the connection unit can be controlled based on the switch control signal from the bus device, thereby achieving automatic address assignment for the bus devices. Thereby, the debugging and maintenance time of the system can be shortened.

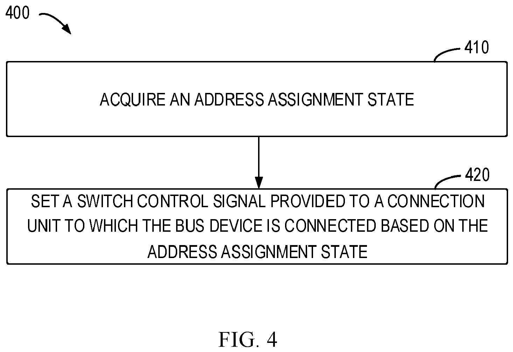

Figure 4 illustrates a flowchart of an example method 400 for address assignment according to some embodiments of the present disclosure. The method 400 may be implemented at the bus device 110, for example, by a microcontroller unit of the bus device 110. The method 400 will be described below with reference to Figures 2A and 2B. It should be understood that the method 400 may include additional actions not shown and/or may omit the actions shown, and the scope of the present disclosure is not limited in this regard.

At block 410, the bus device 110 acquires an address assignment state. The address assignment state indicates whether the bus device has been assigned an address by the gateway. At block 420, the bus device 110 sets a switch control signal provided to a connection unit to which the bus device is connected based on the address assignment state. The switch control signal is used for controlling an on-off state of a switch within the connected connection unit to control a delivery of an address signal generated by the gateway to a downstream connection unit along an address assignment line. The downstream connection unit is disposed in series with the connected connection unit along the address assignment line, and is located downstream of the connected connection unit relative to the gateway.

In some embodiments, the bus device 110, in response to the bus device not being assigned an address by the gateway, sets the switch control signal to be a first control signal, so that a switch within the connected connection unit is in an open state; and in response to the bus device being assigned an address by the gateway, sets the switch control signal to be a second control signal different from the first control signal, so that the switch within the connected connection unit is in a closed state.

In some embodiments, the bus device 110, in response to the bus device having a preset address, sets the switch control signal to be the first control signal.

In some embodiments, the bus device 110, in response to receiving the address signal via a connection unit to which the bus device is connected, performs address assignment for the bus device according to a communication with the gateway.

In some embodiments, the bus device 110 receives an address to be assigned from the gateway via the connected connection unit; in response to receiving the address signal, sets the bus device to have the address; and transmits a positive response that the address has been assigned to the gateway via the connected connection unit.

According to exemplary implementations of the present disclosure, there is also provided a machine-readable storage medium having machine executable instructions stored thereon, wherein the machine executable instructions are executed by a processor to implement the method described above. According to the exemplary implementations of the present disclosure, there is also provided a program product, which is tangibly stored on a non-transitory machine-readable medium and comprises machine executable instructions, which are executed by a processor to implement the method described above.

Various aspects of the present disclosure are described herein with reference to the flowcharts and/or block diagrams of methods, apparatuses, devices, and program products implemented in accordance with the present disclosure. It should be understood that each block of the flowcharts and/or block diagrams, as well as the combination of various blocks in the flowcharts and/or block diagrams, may be implemented by machine-readable program instructions.

These machine-readable program instructions may be provided to processing units of general-purpose computers, special-purpose computers, servers, microcontrollers, clusters thereof, or processing units of other programmable data processing apparatuses, thereby producing a machine that, when executed through machines, programmable data processing apparatuses, and/or other devices, creates an apparatus that implements the functions/actions specified in one or more blocks in the flowcharts and/or block diagrams. These machine-readable program instructions may also be stored in a machine-readable storage medium, such instructions cause the machine, programmable data processing apparatus, and/or other device to operate in a specific manner. Therefore, the machine-readable medium storing the instructions comprises an article of manufacture, which comprises instructions for implementing various aspects of the functions/actions specified in one or more blocks in the flowcharts and/or block diagrams.

Machine-readable program instructions may be loaded onto a machine, other programmable data processing apparatus, or other device to cause a series of operational steps to be performed on the machine, other programmable data processing apparatus, or other device, to produce a machine-implemented process, thereby enabling the instructions executed on the machine, other programmable data processing apparatus or other devices implement the functions/actions specified in one or more blocks in the flowcharts and/or block diagrams.

The flowcharts and block diagrams in the accompanying drawings illustrate the architectures, functions, and operations that may be implemented on the systems, methods, and program products according to various implementations of the present disclosure. In this regard, each block in the flowchart or block diagram may represent a portion of a module, a program segment, or instructions, which contains one or more executable instructions for implementing a specified logical function. In some alternative implementations, the functions indicated in the block may also occur in a different order than those indicated in the accompanying drawings. For example, two consecutive blocks may actually be executed in parallel, and sometimes they may also be executed in the opposite order, depending on the function involved. It should also be noted that each block in the block diagrams and/or flowcharts, as well as the combination of blocks in the block diagrams and/or flowcharts, may be implemented by using special-purpose hardware based systems that perform specified functions or actions, or may be implemented using a combination of special-purpose hardware and machine instructions.

Various implementations of the present disclosure have been described above, and the above description is exemplary, not exhaustive, and is not limited to the disclosed implementations. Many modifications and variations will be apparent to the ordinary skilled in the art without departing from the scope and spirit of the described implementations. The terminology used herein is selected to best explain the principles, practical applications of various implementations, or improvements to technology in the market, or to enable other ordinary skilled in the art to understand the various implementations disclosed herein.

## Claims

1. An address assignment apparatus (201), **characterized by** comprising:
a gateway (210) configured to generate an address signal that enables address assignment;
an address assignment line (222) coupled to the gateway (210) to receive the address signal, wherein the address assignment line (222) is provided with a plurality of switches (228);
a plurality of connection units (120) disposed in series along the address assignment line (222) and each adapted to be connected to a bus device (110), wherein each of the plurality of switches (228) is located within one of the plurality of connection units (120), and
each of the plurality of connection units (120) is further adapted to:
couple the address assignment line (222) to a bus device (110) to which the connection unit (120) is connected, and
control, according to a switch control signal from the connected bus device (110), an on-off state of a switch (228) of the plurality of switches (228) that is located within the connection unit (120) to control a delivery of the address signal to a downstream connection unit of the plurality of connection units (120), the downstream connection unit being located downstream of the connection unit (120) relative to the gateway (210).

2. The address assignment apparatus (201) of claim 1, **characterized in that** each of the plurality of connection units (120) is further adapted to:
in response to the switch control signal being a first control signal, cause a switch (228) within the connection unit (120) to be in an open state to prevent the address signal from being delivered to the downstream connection unit; and
in response to the switch control signal being a second control signal different from the first control signal, cause the switch (228) within the connection unit (120) to be in a closed state, so that the address signal is delivered to the downstream connection unit.

3. The address assignment apparatus (201) of claim 2, **characterized in that** each of the plurality of switches (228) is a normally closed switch, the second control signal maintains the closed state of the normally closed switch, and the first control signal causes the normally closed switch to open.

4. The address assignment apparatus (201) of claim 1, **characterized by** further comprising:
a communication data line connected to the gateway (210) and in parallel with the address assignment line (222), and
wherein each of the plurality of connection units (120) is further adapted to couple the communication data line to a bus device (110) to which the connection unit (120) is connected.

5. The address assignment apparatus (201) of claim 4, **characterized in that** the gateway (210) is further configured to:
in a case that the address signal is valid, transmit a first address to be assigned through the communication data line; and
in response to determining that the first address has been assigned, transmit a second address to be assigned through the communication data line.

6. The address assignment apparatus (201) of claim 4, **characterized in that** the communication data line comprises:
a transmission data line adapted to transmit data from the gateway (210); and
a reception data line adapted to transmit data to the gateway (210).

7. A power distribution cabinet (100), **characterized by** comprising:
the address assignment apparatus (201) according to any of claims 1 to 6; and
at least one bus device (110), each of the at least one bus device (110) being connected to one of the plurality of connection units (120) and configured to set the switch control signal provided to a connection unit (120) to which the bus device (110) is connected based on an address assignment state of the bus device (110).

8. The power distribution cabinet (100) of claim 7, **characterized in that** each of the at least one bus device (110) is further configured to:
in response to the bus device (110) not being assigned an address by the gateway (210), set the switch control signal to be a first control signal, so that a switch (228) within the connected connection unit (120) is in an open state;
in response to the bus device (110) being assigned an address by the gateway (210), set the switch control signal to be a second control signal different from the first control signal, so that the switch (228) within the connected connection unit (120) is in a closed state; and
in response to the bus device (110) having a preset address, set the switch control signal to be the first control signal.

9. The power distribution cabinet (100) of claim 7, **characterized in that** each of the at least one bus device (110) is further configured to:
in response to receiving the address signal via a connection unit (120) to which the bus device (110) is connected, perform address assignment for the bus device (110) according to a communication with the gateway (210).

10. The power distribution cabinet (100) of claim 9, **characterized in that** each of the at least one bus device (110) is further configured to:
receive an address to be assigned from the gateway (210) via the connected connection unit (120);
in response to receiving the address signal, set the bus device (110) to have the address; and
transmit a positive response that the address has been assigned to the gateway (210) via the connected connection unit (120).

11. An address assignment method (400), **characterized by** comprising:
acquiring (410) an address assignment state indicating whether a bus device (110) has been assigned an address by a gateway (210); and
setting (420) a switch control signal provided to a connection unit (120) to which the bus device (110) is connected based on the address assignment state, the switch control signal being used for controlling an on-off state of a switch (228) within the connected connection unit (120) to control a delivery of an address signal generated by the gateway (210) to a downstream connection unit along an address assignment line,
wherein the downstream connection unit is disposed in series with the connected connection unit (120) along the address assignment line, and is located downstream of the connected connection unit (120) relative to the gateway (210).

12. The method (400) of claim 11, **characterized in that** setting (420) the switch control signal provided to a connection unit (120) to which the bus device (110) is connected comprises:
in response to the bus device (110) not being assigned an address by the gateway (210), setting the switch control signal to be a first control signal, so that a switch (228) within the connected connection unit (120) is in an open state; and
in response to the bus device (110) being assigned an address by the gateway (210), setting the switch control signal to be a second control signal different from the first control signal, so that the switch (228) within the connected connection unit (120) is in a closed state.

13. The method (400) of claim 12, **characterized in that** setting (420) the switch control signal provided to a connection unit (120) to which the bus device (110) is connected comprises:
in response to the bus device (110) having a preset address, setting the switch control signal to be the first control signal.

14. The method (400) of claim 11, **characterized by** further comprising:
in response to receiving the address signal via a connection unit (120) to which the bus device (110) is connected, performing address assignment for the bus device (110) according to a communication with the gateway (210).

15. The method (400) of claim 14, **characterized in that** performing address assignment for the bus device (110) according to a communication with the gateway (210) comprises:
receiving an address to be assigned from the gateway (210) via the connected connection unit (120);
in response to receiving the address signal, setting the bus device (110) to have the address; and
transmitting a positive response that the address has been assigned to the gateway (210) via the connected connection unit (120).
